# EUROPEAN PATENT APPLICATION

(11) **EP 4 716 190 A1**
(43) Date of publication of application: **25.03.2026**
(21) Application number: 24854362.1
(22) Date of filing: 05.08.2024
(51) Int. Cl.: H04L 67/131, H04W 4/16

(54) **METHOD AND APPARATUS FOR TRANSMITTING AND RECEIVING AVATAR MODEL**

(30) Priority: 11.08.2023 KR 20230105668
(71) Applicant: Samsung Electronics Co., Ltd., Suwon-si, Gyeonggi-do 16677 (KR)
(72) Inventor: RHYU, Sungryeul, Suwon-si, Gyeonggi-do 16677 (KR)
(74) Representative: Nederlandsch Octrooibureau
(86) International application number: PCT/KR2024/011469
(87) International publication number: WO 2025/037810

(57) **Abstract**

The present disclosure relates to a 5G communication system for supporting a higher data transmission rate. According to an embodiment of the present disclosure, an operation method of a sending terminal for transmitting an avatar model may include dividing the avatar model into at least one avatar data and at least one avatar manifest, obtaining at least one transmission manifest based on the at least one avatar manifest, transmitting the at least one transmission manifest to a receiving terminal, and transmitting the at least one avatar data to the receiving terminal based on reception information of the receiving terminal.

## Description

### Technical Field

The present disclosure relates to a method and apparatus for avatar communication. Particularly, the present disclosure relates to a method and apparatus for configuring an avatar manifest and transmitting and receiving an avatar model between terminals based on the avatar manifest.

### Background Art

The 5th-generation (5G) mobile communication technology defines a wide frequency band to allow high transmission speed and new service and may also be implemented in an ultra-high frequency ("above 6 GHz") band referred to as millimeter wave (mmWave), such as 28 GHz and 39 GHz, as well as a below 6 GHz frequency ("sub 6 GHz") band such as 3.5 GHz. Also, in the case of the 6th-generation (6G) mobile communication technology referred to as the system beyond 5G communication (beyond 5G system), implementation in the terahertz (THz) band (e.g., 95 GHz to 3 THz band) is being considered to achieve a transmission speed that is 50 times the transmission speed of the 5G mobile communication technology and an ultra-low delay time that is one tenth of the delay time of the 5G mobile communication technology.

In the early stage of the 5G mobile communication technology, in order to support services and satisfy performance requirements for enhanced mobile broadband (eMBB), ultra-reliable low-latency communications (URLLC), and massive machine-type communications (mMTC), standardization has been performed on beamforming and massive MIMO for mitigating the path loss of radio waves in the ultra-high frequency band and increasing the propagation distance of radio waves, support of various numerologies (operation of multiple subcarrier intervals and the like) and dynamic operation of slot formats for efficient utilization of ultra-high frequency resources, initial access technology for supporting multi-beam transmission and broadband, definition and operation of bandwidth parts (BWPs), new channel coding methods such as low-density parity check (LDPC) codes for large-capacity data transmission and polar codes for reliable transmission of control information, L2 preprocessing, network slicing for providing dedicated networks specialized for particular services, and the like.

Currently, by considering services that the 5G mobile communication technology was intended to support, discussion for initial 5G mobile communication technology improvement and enhancement has been performed, and physical layer standardization for technologies such as vehicle-to-everything (V2X) for assisting the driving determination of autonomous vehicles and increasing the convenience of users based on the position and state information transmitted by the vehicles, new radio unlicensed (NR-U) for the purpose of system operations meeting various regulation requirements in unlicensed bands, NR terminal low power consumption technology (UE power saving), non-terrestrial network (NTN) that is terminal-satellite direct communication for securing a coverage in an area where communication with a terrestrial network is impossible, and positioning has been performed.

In addition, standardization of wireless interface architectures/protocols for technologies such as Industrial Internet of Things (IIoT) for supporting new services through linkage and integration with other industries, Integrated Access and Backhaul (IAB) for providing nodes for expanding network service areas by integrating a wireless backhaul link and an access link, Mobility Enhancement including Conditional Handover and Dual Active Protocol Stack (DAPS) Handover, and 2-step RACH for NR for simplifying a random access procedure has also been performed, and standardization of system architectures/services for 5G baseline architectures (e.g., Service-based Architecture and Service-based Interface) for grafting Network Function Virtualization (NFV) and Software-Defined Networking (SDN) technology, Mobile Edge Computing (MEC) for providing services based on the location of terminals, and the like has also been performed.

When such 5G mobile communication systems are commercialized, connected devices in the trend of explosive increase will be connected to the communication network and accordingly it is expected to require enhanced functions and performance of the 5G mobile communication system and integrated operation of connected devices. For this purpose, new research will be conducted on Extended Reality (XR) for efficiently supporting Augmented Reality (AR), Virtual Reality (VR), Mixed Reality (MR), and the like, 5G performance improvement and complexity reduction utilizing Artificial Intelligence (AI) and Machine Learning (ML), AI service support, metaverse service support, drone communication, and the like.

Also, the development of the 5G mobile communication systems may serve as a basis for the development of not only multi-antenna transmission technologies such as New Waveform, Full Dimensional MIMO (FD-MIMO), Array Antenna, and Large Scale Antenna for ensuring the coverage in the terahertz band of the 6G mobile communication technology, high-dimensional spatial multiplexing technologies using metamaterial-based lenses and antennas and Orbital Angular Momentum (OAM) to improve the coverage of terahertz band signals, and Reconfigurable Intelligent Surface (RIS) technologies, but also full duplex technologies for improving the frequency efficiency and system network of the 6G mobile communication technology, AI-based communication technologies utilizing satellites and AI from the design stage and embedding an end-to-end AI support function to realize system optimization, next-generation distributed computing technologies for realizing services with complexity beyond the limit of the terminal operation capability by utilizing ultrahigh-performance communication and computing resources, and the like.

As described above, because various services may be provided due to the development of wireless communication systems, a scheme for smoothly providing such services is required.

### Disclosure of Invention

### Solution to Problem

According to an embodiment of the present disclosure, an operation method of a sending terminal for transmitting an avatar model may include dividing the avatar model into at least one avatar data and at least one avatar manifest.

According to an embodiment of the present disclosure, the operation method of the sending terminal for transmitting an avatar model may include obtaining at least one transmission manifest based on the at least one avatar manifest.

According to an embodiment of the present disclosure, the operation method of the sending terminal for transmitting an avatar model may include transmitting the at least one transmission manifest to a receiving terminal.

According to an embodiment of the present disclosure, the operation method of the sending terminal for transmitting an avatar model may include transmitting the at least one avatar data to the receiving terminal based on reception information of the receiving terminal.

According to an embodiment of the present disclosure, a sending terminal for transmitting an avatar model may include a transceiver and at least one processor.

According to an embodiment of the present disclosure, the at least one processor may be configured to divide the avatar model into at least one avatar data and at least one avatar manifest.

According to an embodiment of the present disclosure, the at least one processor may obtain at least one transmission manifest based on the at least one avatar manifest.

According to an embodiment of the present disclosure, the at least one processor may be configured to transmit the at least one transmission manifest to a receiving terminal.

According to an embodiment of the present disclosure, the at least one processor may be configured to transmit the at least one avatar data to the receiving terminal based on reception information of the receiving terminal.

### Brief Description of Drawings

FIG. 1 illustrates a structure of a terminal for transmitting and receiving an avatar model according to an embodiment of the present disclosure.
FIG. 2 illustrates a transmission path for an avatar transmission manifest and avatar data according to a connection method according to an embodiment of the present disclosure.
FIG. 3 illustrates a transmission path for an avatar transmission manifest and avatar data according to a connection method according to an embodiment of the present disclosure.
FIG. 4 illustrates a signal flow for media transfer according to an embodiment of the present disclosure.
FIG. 5 illustrates a signal flow for media transfer according to an embodiment of the present disclosure.

### Mode for the Invention

Terms used in the present specification will be briefly described and then the present disclosure will be described in detail.

The terms used in the present disclosure are those general terms currently widely used in the art in consideration of functions in the present disclosure, but the terms may vary according to the intentions of those of ordinary skill in the art, precedents, or new technology in the art. Also, in some cases, there may be terms that are optionally selected by the applicant, and the meanings thereof will be described in detail in the corresponding portions of the present disclosure. Thus, the terms used herein should be understood not as simple names but based on the meanings of the terms and the overall description of the present disclosure.

Throughout the present disclosure, when an element is referred to as being "connected" to another element, it may be "directly connected" to the other element or may be "electrically connected" to the other element with one or more intervening elements therebetween.

Throughout the present disclosure, when something is referred to as "including" an element, one or more other elements may be further included unless otherwise specified. Also, as used in the specification, the terms such as "units" and "modules" may refer to units that perform at least one function or operation, and the units may be implemented as hardware or software or a combination of hardware and software.

Also, the expression "at least one of A, B, and C" may refer to any one of "A", "B", "C", "A and B", "A and C", "B and C", and "A, B, and C".

Hereinafter, embodiments of the present disclosure will be described in detail with reference to the accompanying drawings so that those of ordinary skill in the art may easily implement the embodiments of the present disclosure. However, the present disclosure may be embodied in many different forms and should not be construed as being limited to the embodiments set forth herein. Also, portions irrelevant to the description of the present disclosure will be omitted in the drawings for a clear description of the present disclosure, and like reference numerals will denote like elements throughout the specification.

Extended reality (XR) may be a technology for displaying three-dimensional (3D) graphic elements that are combined with the user's reality in a 3D space. Examples of XR content may include an application that provides information based on the user's location or interaction in an airport or museum, and when a user searches for an object (e.g., an art collection), a description of the object may be displayed in a spatial speech balloon, an additional 3D video may be played, or a content control loop may be executed by a user interaction (e.g., an end button).

In the above example, all of an animation, the execution of a control loop by a user interaction, and the like may be pre-planned and embedded in the XR content, and when the user retrieves and selects an object, an animation may be displayed according to a planned time flow and then may be ended and a new interaction event not described may be treated as an error or ignored.

The technical background of the present disclosure may be avatar communication that combines the above 3D content, a mobile communication network, and a user interaction. As a basic scenario, when a first terminal captures a movement (gesture or expression) of user 1, substitutes the movement with a series of commands, provides an avatar model, which is prepared in advance or generated through continuous user shooting and artificial intelligence learning, and transmits the same to a second terminal of user 2 as a target for avatar communication, the second terminal may manipulate the avatar model based on the received avatar model and commands, render the manipulated model, and display the same on a display, so that user 2 may see the user 1's avatar combined with the real world before his eyes as an XR object. The second terminal may also perform the same operation to allow the first terminal to display the user 2's avatar, so that user 1 may also see the user 2's avatar represented in XR.

An avatar model may include a mesh, a texture, and a skeleton, the mesh may include vertexes, a face connecting three or more vertexes, and vertex-to-texture mapping information, and the texture may include the colors of the vertexes and the surface information of the faces. The skeleton may represent the structure of a human body, with the connection of lines representing the connection of joints between bones in a format such as a scene graph.

The avatar model may be generated based on various pictures, videos, or other data obtained from the user's terminal or other sensor devices, and a device performing the generation may be a separate specialized processing device provided by the user's terminal or a service provider providing a service to which the user subscribes.

The avatar model may generally vary in size depending on the user, the size may also vary depending on the display resolution and display capability of the terminal displaying an avatar, and the size may also vary depending on the technological maturity of the service provider.

For the avatar model information to be used in avatar communication, particularly real-time avatar communication, the avatar model should be first transmitted from the terminal of the user possessing the avatar model to the opponent terminal, and a data size of 20MB may be considered extremely large, even from the viewpoint of 5G uplink traffic.

An example of a similar service in the related art may be a video call, and because a mutual video is immediately displayed after a connection is established by accepting an opponent's call when a video call is attempted, the initial delay time of avatar communication may be recognized as significantly degrading the QoS compared to the video call. Accordingly, a method of reducing the initial delay time may be required.

A ProSe layer discussed herein may refer to the entire layer that performs control a control operation for a terminal-to-terminal (device-to-device (D2D) or proximity service (ProSe)) communication service. This layer may be present above an AS layer and may exchange signaling with the AS layer for terminal-to-terminal communication. Also, the layer may provide a data transmission function on a link established for direct communication between terminals. That is, it may include an IP protocol, a non-IP protocol, and a transport protocol (e.g., TCP or UDP) for message transmission.

Also, the terminal (UE) may be connected to the 5G Radio Access Network (5G-RAN) to access the 5G core network device. The 5G core network may include the following network functions. An access and mobility management function (AMF) may refer to a network function of managing the mobility of the terminal. A session management function (SMF) may refer to a network function of managing a packet data network connection provided to the terminal. This packet data network connection may be referred to as a protocol data unit (PDU) session. A policy and charging function (PCF) may refer to a network function of applying the service policy, charging policy, and PDU session policy of the mobile communication service provider for the terminal. A unified data management (UDM) function and may refer to a network function of storing and managing information about subscribers. A network exposure function (NEF) may access information for managing terminals in the 5G network and thus may perform a function of being connected to network functions (NFs) of the 5G core network to send information about the terminal to the NFs or report information about the terminal to the outside, such as subscription to an mobility management event for the terminal, subscription to a session management event for the terminal, a request for session-related information, configuration of charging information of the terminal, a request for PDU session policy change for the terminal, or the like. 5G-RAN may refer to a base station that provides a wireless communication function to the terminal. A user plane function (UPF) may perform a gateway function of sending packets transmitted and received by the terminal. The UPF may be connected to a data network to send a data packet generated in the 5G system to an external data network, and for example, it may be connected to a data network connected to the Internet to route a data packet transmitted by the terminal to the Internet.

A proximity-based service (ProSe) function may refer to a logical function of performing a network operation required to provide a proximity service. There may be one or more ProSe functions in a public land mobile network (PLMN), which may be distributed to serve a particular area or serve particular terminals. The ProSe function may perform a direct provisioning function of providing information required for the terminal to use a ProSe service. This may mean provisioning, to the terminal, information required for a direct discovery function used for direct terminal-to-terminal discovery or for a direct communication function used for direct terminal-to-terminal communication. Also, the ProSe function may perform a function of managing the name or code used for direct discovery to support a direct discovery function used for direct terminal-to-terminal discovery. Also, the ProSe function may perform a function of triggering the terminal to perform a direct discovery function and may also provide a charging or security function for the use of a ProSe service. The terminal may be connected to the ProSe function through a PC3 Interface defined in 3GPP.

An embodiment of the present disclosure may propose a method of configuring an avatar model including a plurality of independently executable steps to reduce an initial delay time.

An embodiment of the present disclosure may propose a system architecture of a sending terminal and a receiving terminal that may selectively receive and execute a step of the avatar model to reduce an initial delay time.
#1
   An embodiment of the present disclosure may propose a method of configuring an avatar model including a plurality of independently executable steps to reduce an initial delay time.

According to an embodiment of the present disclosure, the avatar model may include various types of avatar model data for representing the avatar model, and an avatar model manifest that is metadata describing the relationship between the respective types of data.

| | | |
|---|---|---|
| Avatar model : | Avatar model manifest | Avatar model data |

According to an embodiment of the present disclosure, the types of avatar model data may include mesh, texture, skeleton, and scene description.

| | | | | |
|---|---|---|---|---|
| Avatar model data: | Mesh | Texture | Skeleton | Scene description |

The mesh may be information for representing a 3D model in the 3D space by using vertexes and faces.

The texture may be information for representing the color information of vertexes and faces of the mesh, such as colors or images.

The skeleton may be information for representing the structure of a human body, such as bones, perspectives, and facial features.

The scene description may be information for representing the relationship between the mesh, the texture, and the skeleton.

According to an embodiment of the present disclosure, a plurality of data included in the avatar model may have an alternative relationship between one data and another data. For example, medium-resolution texture data may have an alternative relationship with respect to low-resolution texture data.

| | | | |
|---|---|---|---|
| Alternative relationship: | Low resolution | Medium resolution | High resolution |

According to an embodiment of the present disclosure, while the receiving terminal receives and displays texture data of the lowest resolution for immediate avatar representation, when an intermediate resolution is received by using a spare bandwidth, an avatar may be displayed by using medium-resolution texture data instead of the previous low-resolution texture. According to an embodiment of the present disclosure, a plurality of data included in the avatar model may have a supplementary relationship between one data and another data. For example, medium-density mesh data may be supplementary to low-density mesh data.

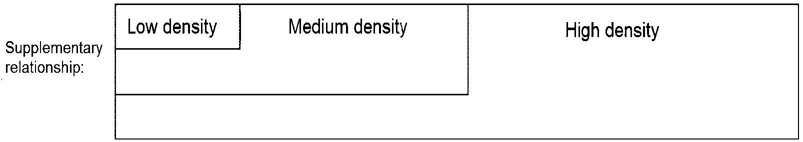

According to an embodiment of the present disclosure, while the receiving terminal receives and displays mesh data of the lowest density (e.g., 100 vertex information per unit space) for immediate avatar representation, when mesh data of medium density (e.g., 10,000 vertex information per unit space) is received by using a spare bandwidth, the space occupied by the previous low-density mesh data may be filled by using both the low-density and medium-density mesh data (e.g., 10,100 vertex information may be filled per the same unit space). According to an embodiment of the present disclosure, the avatar model manifest may be characterized by including one or more steps that may be selectively received by the receiving terminal and including information about each step. The receiving terminal may receive information about steps, determine a step to be received based on the transmission time required for each step and the attribute information of each step, and receives data necessary for avatar representation based on the determination. Data transmission information in the avatar model manifest may be suitably converted according to the mobile communication network protocol connected between the sending terminal and the receiving terminal and then generated and exchanged as an avatar transmission manifest, and for this purpose, a hint in the manifest may be provided for each transmission protocol.

According to an embodiment of the present disclosure, the avatar model manifest may be configured as follows.

| | | | |
|---|---|---|---|
| Avatar model manifest: | Avatar model attribute | Step attribute | Transmission hint |

The avatar model attributes may include sub-attribute information for distinguishing avatar models, such as model identifier, owner identifier, number of steps, and policy.

| Avatar model attribute | |
|---|---|
| | Model identifier |
| | Owner identifier |
| | Number of steps |
| | Model policy |

The model identifier may be unique in the user and the service provider or between the providers.

The owner identifier may represent an identifier of the object represented by the avatar model or the owner of an avatar model file. The owner identifier may be unique in the service provider or between the providers.

The number of steps may represent the number of steps provided by the manifest.

The model policies may represent the policies that the receiving terminal should follow when using the avatar model. According to an embodiment of the present disclosure, the policies may include delete_after_close and preserve_after_close. The delete_after_close may indicate that the avatar model should be deleted after the avatar communication is ended. The preserve_after_close may indicate that the avatar model may be preserved even after the end of the avatar communication and used in the next communication.

The step attributes may represent information to be considered in transmitting data corresponding to each step and may include step identifier, size, semantics, quality, and step policy. Each step may assume that correct avatar representation is impossible when only a portion of each step is received. In other words, an artifact that occurs when representing an avatar when only a portion of a step has been received may be considered as an error in the receiving terminal, and the sending terminal may determine, based on the policy, whether to allow or prohibit representing an avatar when only a portion of the step has been received.

| Step attribute | | | |
|---|---|---|---|
| | Step identifier | | |
| | Step size | | |
| | semantics[] | | |
| | | metadata_type | |
| | | semantic[] | |
| | qualities | | |
| | | quality[] | |
| | | | quality_type |
| | | | quality_value |
| | Step policy[] | | |

The step identifier may be a unique step identifier in the avatar model.

The step size may be the sum of the sizes of data included in the step. The receiving terminal may determine reception based on the sum of data, regardless of the number or type of data to be received. Particularly, the sizes may be provided as a lossless size and a loss size. The lossless size may be data that does not allow an error, and may refer to the sum of the sizes of data that should be corrected through retransmission when an error occurs in the reception process. The loss size may be data that allows an error, and may refer to the sum of the sizes of data that does not require retransmission even when an error occurs in the reception process.

The semantics may be a list of semantic features included in the step. Also, metadata_type may be specified to specify the representation range of semantic features. Depending on the transmission range, an embodiment of the present disclosure may propose face, head, upper body with arms, and full body as basic semantic features.

When the step attributes include semantics and semantic features are included, the receiving terminal may make a step reception determination based on the range represented by the step. For example, when a step only includes faces from the viewpoint of the receiving terminal attempting to represent a full body, it may determine to select a step that includes more data and full-body semantic features than the step.

The qualities may represent the quality information included in the step. Additionally, quality_type and quality_value may be specified to specify the representation range of quality. The Quality_type may include PSNR, resolution, and num_vertex.

The PSNR may represent the lossy compression quality of texture data in an image or video format compared to the original copy.

The resolution may represent the resolution of texture data in an image or video format.

The num_vertex may represent the number of vertexes included in the mesh data.

The step policies may represent the policies that the receiving terminal should follow when receiving the step of the avatar model. According to an embodiment of the present disclosure, the policies may include partial_playback_allowed and partial_playback_disallowed. The partial_playback_allowed may mean that the receiving terminal may attempt to play an avatar model after receiving a portion of the step data. The partial_playback_disallowed may mean that the receiving terminal may attempt to play an avatar model only after reception of the step data is complete.

The transmission hint may provide information for generating an SDP offer that is provided by the sending terminal to the receiving terminal to transmit the data for each step.

| Transmission hint | | | |
|---|---|---|---|
| | Step[] | | |
| | | Step identifier | |
| | | Data transmission information[] | |
| | | | m-line |
| | | | a-line |
| | | | Access position |
| | | | Access size |

The transmission hint may include information for transmitting data belonging to each step with respect to all steps included in the avatar model manifest. Each step may include a step identifier and data transmission information for one or more data belonging to the step. The data transmission information may provide attribute information used to generate a message corresponding to the transmission protocol for each data. By using this, an avatar model sender of the sending terminal may generate a message suitable for the transmission protocol and send the message to a network client.

The step identifier may specify the step to which data information belongs.

The data information may include an m-line, an a-line, an access location, and an access size.

The m-line may represent the media type, protocol, and format of the data to be transmitted, with reference to the syntax of the session description protocol (SDP) defined in the IETF. According to the SDP, because attributes are specified starting from "m=" and in a determined order and the attributes are separated by spaces, the attributes may be specified as "m=mediatype protocol format" in an embodiment of the present disclosure.

The a-line may specify an additional attribute for data indicated by the m-line. In an embodiment of the present disclosure, "mid" may be used to represent the media identifier attribute of data, and the data may have a unique identifier for each of different data in the avatar model. According to the SDP, because attributes are specified in the format of "a=mid:<value>", the attributes may be specified as "a=mid:media identifier" in an embodiment of the present disclosure.

The media types defined in the SDP may include "audio", "video", "text", "application", and "message". For example, the media types may be a video in the case of the texture, and the media type may be an application in the case of the mesh.

The protocol may be a recommended value of the protocol through which the data is transmitted, and when not supported by the network to which the sending and receiving terminals belong, it may be replaced with another value. When supported, the protocol and format value may be used. For example, in the case of the mesh, UDP/DTLS/SCTP may be designated as the protocol and webrtc-datachannel may be designated as the format. For example, in the case of the texture, RTP/AVPF may be designated as the protocol and 99 may be designated as the format.

The access location may represent a path through which the avatar model transmitter accesses and transmits data to the network. The path may be the location in the avatar model file, the location in the sending terminal's storage, or the URL address of a storage or internet server on the network outside the sending terminal.

The access size may represent the start and end locations of the data in the access location.

In the case of the data external to the sending terminal, through the communication between the avatar model transmitter and the external server, it may be negotiated such that the access location portion of the file of the external server is transmitted to a particular port of the external server address, and the avatar model transmitter may send the external server address and port to the receiving terminal by specifying the external server address and port in the SDP when specifying the SDP.

After a transmission channel is established between the sending terminal and the receiving terminal, the avatar model transmitter may transmit the corresponding file through each transmission channel at the request of the receiving terminal.

According to an embodiment of the present disclosure, the avatar model transmitter may configure an SDP offer for each step by using a transmission hint, the SDP offer may include data included in the step identifier specified in the transmission hint, the m line in the data may be listed by using m-line information, and in the m-line format, media, proto, and fmt may be respectively specified by using media type, protocol, and format information and the a-line may be specified by using mid information.

Because other contents of the generated SDP offer message, such as port information of the m line or connection information of c line, use the available port and IP address information of the sending terminal, they may not be provided in the transmission hint. However, the avatar model transmitter according to an embodiment of the present disclosure may be characterized by designating different unique ports for different data.

By using different ports for the respective data, the receiving terminal receiving a plurality of SDP offers or a merged SDP offer described below may simultaneously initiate data reception for the data belonging to one or more steps, regardless of whether other data has been completely received.

The sending terminal may send a transmission protocol message including an avatar transmission manifest to the receiving terminal.

The avatar transmission manifest may include step information and an SDP offer corresponding to each step.

Depending on the communication architecture, a plurality of SDP offers may be allowed, or only a single SDP offer may be allowed.

In the transmission manifest type 1 according to an embodiment of the present disclosure, model attributes and step information may be transmitted. The receiving terminal having received the transmission manifest may select a desired step from the step information and request transmission of the corresponding step by using the step identifier. The sending terminal may transmit an SDP offer for the requested step, and the receiving terminal may initiate transmission from the sending terminal after sending an SDP answer.

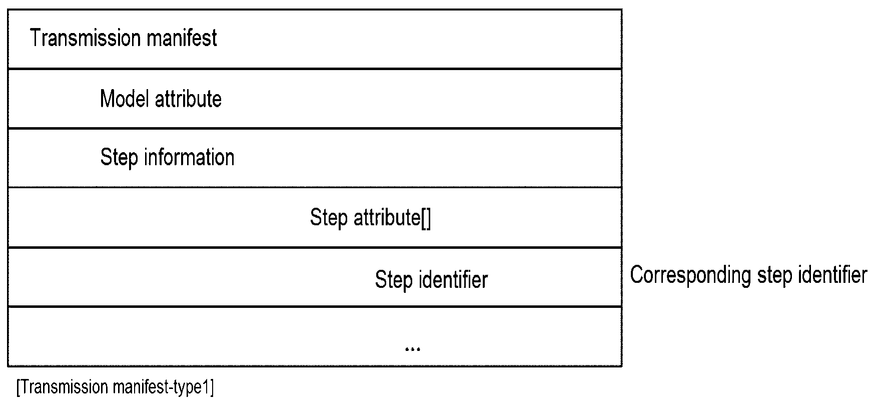

According to an embodiment of the present disclosure, in the transmission manifest type 2, model attributes, step information, and a plurality of SDP offers may be transmitted together. In this case, each SDP offer may be identified by the session_id field value in the o line of the SDP, and information necessary to identify and transmit the included data may be provided for each data.

Each step in the step information of the transmission manifest may specify the session_id value of the corresponding SDP as the step identifier field value to specify the corresponding SDP.

In the transmission manifest type 2, a plurality of SDP offers may be identifyed by the session _id value of the o line.

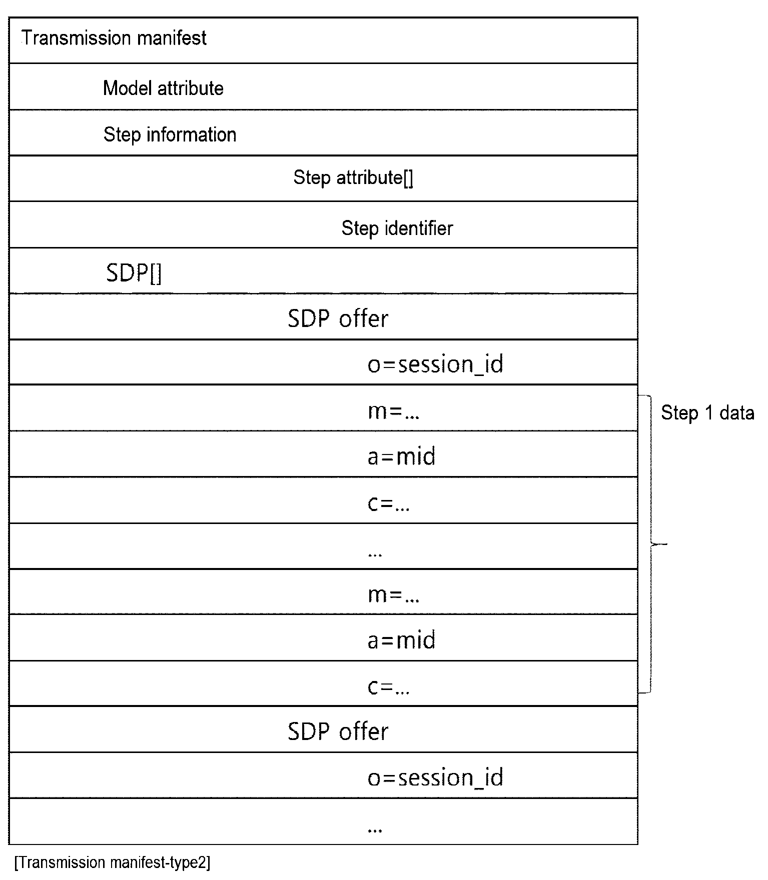

According to an embodiment of the present disclosure, in the transmission manifest type 3, model attributes, step information, and a merged SDP in which SDP offers are merged into one may be transmitted together. In this case, data included in each step may additionally include a step_id attribute and may include a step identifier of the corresponding step as the value of the step_id. The transmission manifest type 3 may include two steps and one merged SDP, and a step identifier "1" of the first step and a step identifier "2" of the second step may be indicated by the step_id field among the attributes in the data in the SDP offer.

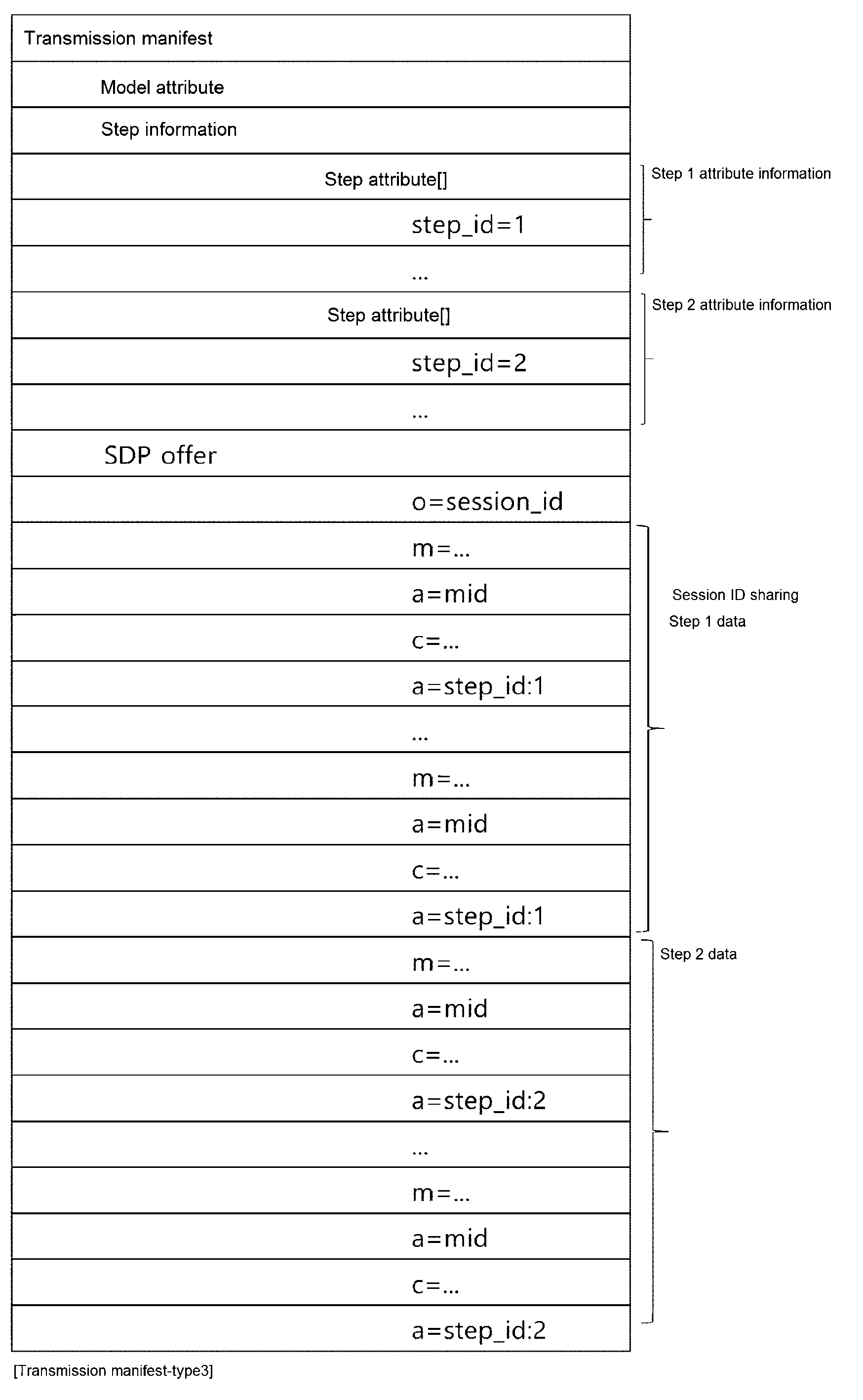

#2
   An embodiment of the present disclosure may propose a system architecture of a sending terminal and a receiving terminal that may selectively receive and execute a step of the avatar model to reduce an initial delay time.

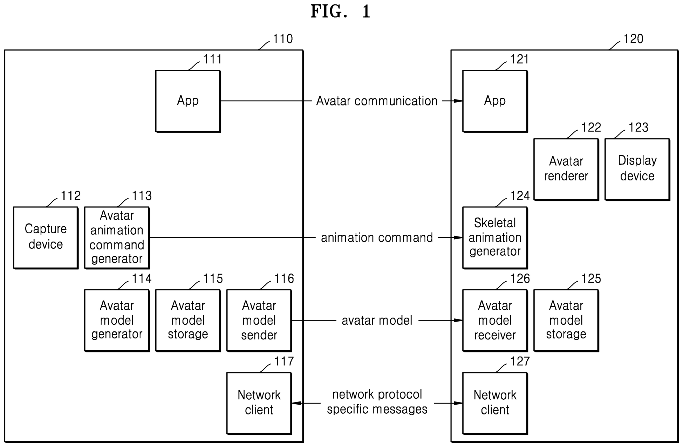

FIG. 1 illustrates a structure of a terminal for transmitting and receiving an avatar model according to an embodiment of the present disclosure.

A sending terminal 110 according to an embodiment of the present disclosure may include an app 111, a capture device 112 for capturing a user's gesture and expression, an animation command generator 113 for animate an avatar based on the captured information, an avatar model generator 114 for generating an avatar model, an avatar model storage 115 for storing the generated avatar model, an avatar model transmitter 116 for transmitting the avatar model based on manifest information of the avatar model, a service provider or network operator app, and a network connection device 117.

According to an embodiment of the present disclosure, a receiving terminal 120 may include an app 121, an avatar model receiver 126 for selecting and receiving a step of an avatar model from the sending terminal 110, an avatar model storage 125 for storing the received avatar model, a skeletal animation generator 124 for moving the avatar model based on an animation command received from the sending terminal 110, an avatar renderer 122 for rendering a 3D model generated from the skeletal animation generator 124, a display device 123, a service provider or network operator app, and a network connection device 127.

An avatar model may be transmitted between an avatar model transmitter and receiver, a step to be received for avatar model transmission may be determined, and an avatar transmission manifest may be transmitted to determine the step to be received. The avatar transmission manifest may be generated from an avatar model manifest, and the structure of an SDP offer in the transmission manifest may vary depending on the type of a communication architecture and the protocol message format.

The sending terminal 110 or the receiving terminal 120 may include a processor (not illustrated) including one or more processors or other processing devices for controlling functions, processes, and/or methods proposed above or to be proposed below. The operations of the sending terminal or the receiving terminal proposed above or to be proposed below may be implemented by the processor (not illustrated). The terms "transmission" and "reception" are used herein for illustrative purposes only and may be interchangeably used without departing from the scope of embodiments.
#3

### <Operation in Communication Architecture>

According to an embodiment of the present disclosure, the connection for step-by-step transmission of an avatar model may be classified into the following three types of connections, depending on the service type and the type of a service provider providing the connection between terminals.
- IMS connection that ensures compatibility between network operators (hereinafter referred to as network operator compatible connection)
- IMS connection that uses IMS but is intended for OTT or network operator unique (proprietary) service (hereinafter referred to as network operator/OTT unique connection)
- WebRTC connection for OTT unique service (hereinafter referred to as OTT unique connection)

In an embodiment of the present disclosure, the transmission manifest may vary and the step information request procedure between the sending and receiving terminals may vary depending on the connection methods described above. In an embodiment of the present disclosure, the differences between methods by which the avatar transmission manifest is sent in the respective connection methods will be described.

### <IMS>

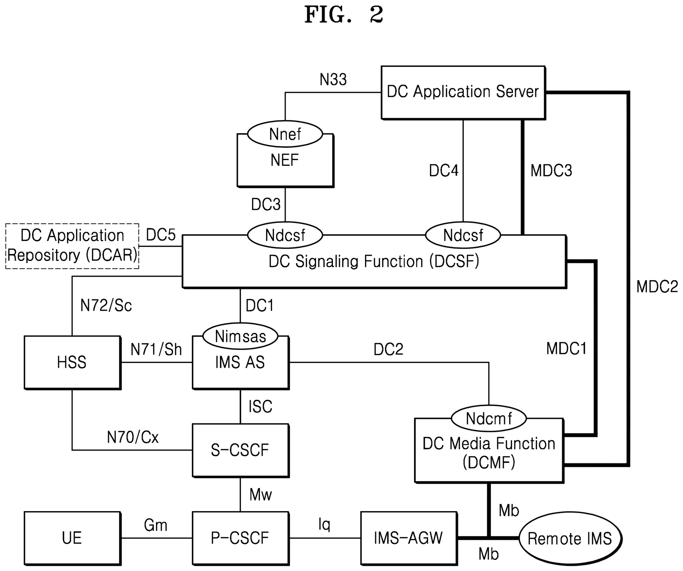

FIG. 2 illustrates a transmission path for an avatar transmission manifest and avatar data according to a connection method according to an embodiment of the present disclosure.

In the IMS-based network operator compatible connection or the network operator unique connection, the sending terminal may generate a SIP INVITE message that is a first message including the phone number of the receiving terminal and the like for connection with the receiving terminal.

According to an embodiment of the present disclosure, the payload of the SIP INVITE message may include an avatar transmission manifest, and the avatar transmission manifest may include avatar model attributes, step attributes, and all SDPs for the respective steps generated by the avatar model transmitter. For this purpose, the above transmission manifest-type 2 or transmission manifest-type 3 may be used.

The first message may be sent to IMS AS after passing through P-CSCF, S-CSCF, HSS, or the like to examine whether the terminal is eligible for a communication service or the like. The data transmission channels in the SDP in the first message may be classified as a media channel and a data channel depending on the type of data, then converted into a second message with IP address and port information replaced, according to requirements such as Network Address Translation (NAT), and then relayed to the next server or terminal.

When a data channel is included in the SDP, the IMS AS may request the DCSF to open the data channel upon receiving a corresponding message and the DCSF may instruct the DCMF to open the data channel, thereby establishing the data channel.

The receiving terminal may receive a transmission manifest including the SDP including the IP address and port number converted through the above processes and perform a receiving terminal operation described below.

### <Operation of Receiving Terminal>

In an embodiment of the present disclosure, an initial delay time, a target initial delay time, and an actual delay time may be defined.

The time required to completely receive each step may be referred to as an estimated initial service delay (EISD) for each step, and the EISD may vary depending on the levels of network resources such as bandwidth and delay that may be provided by the network in which the receiving terminal is located.

A user or a service provider may designate a targeted initial service delay (TISD) value as an allowable initial delay in the app operation configuration of the receiving terminal.

The actual service delay time required to receive data for service initiation may be referred to as a measured initial service delay (MISD).

According to an embodiment of the present disclosure, the receiving terminal may calculate an EISD for each step and determine whether to receive a step within the TISD. The receiving terminal may calculate an EISD for each step and select the step as a reception target when the EISD is lower than the TISD. When no EISD of any step is lower than the TISD, the step with the lowest EISD may be selected among the steps.

In the IMS connection, the receiving terminal may select a step and then recognize the SDP corresponding to the step as an SDP offer, generate an SDP answer, and transmit the same to the sending terminal. In the typical IMS connection, because a firewall NAT or a signaling server mediates and transmits the SDP offer/answer between the sending and receiving terminals, the receiving terminal may transmit the SDP answer to the P-CSCF, the firewall NAT, or the signaling server.

Depending on the policy for each step, the receiving terminal may display an opponent's avatar on the screen upon completion of the step reception or at a suitable time.

### <RTC>

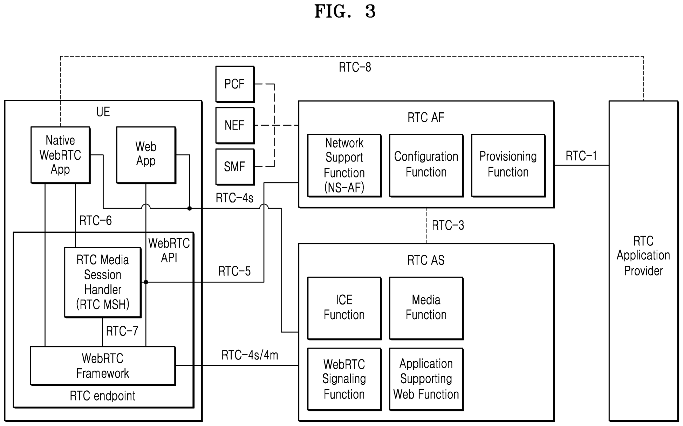

FIG. 3 illustrates a transmission path for an avatar transmission manifest and avatar data according to a connection method according to an embodiment of the present disclosure.

In the OTT service provider unique connection, the service provider may mediate the discovery of the sending terminal and the receiving terminal.

The sending terminal may request a connection to the service provider (an RTC Application Provider of FIG. 3) for connection with the receiving terminal. In FIG. 3, the data transmission path between the terminal and the service provider is denoted by RTC-8.

The sending terminal may receive an identifier of the receiving terminal from the service provider. The signaling server (a WebRTC signaling function of FIG. 3) may assist in determining the address and optimal transmission path from the identifier. The sending terminal may transmit a connection request to the signaling server by using the identifier of the receiving terminal, and the signaling server may find the receiving terminal and send the request to the receiving terminal.

According to an embodiment of the present disclosure, a method of transmitting the manifest may be considered in two cases as follows.

### <Case 1>

In Case 1, the sending terminal may send a transmission manifest including the SDP to the signaling server, and the signaling server may send the transmission manifest to the receiving terminal. Because a general WebRTC signaling server processes only one SDP offer at one time instead of passing a manifest including a plurality of SDP offers as in [Transmission manifest-type 2], a merged SDP offer may be configured as in [Transmission manifest-type 3] and an step identifier a=step_id may be specified for the data corresponding to each step. Because an SDP extended with user-defined attributes may not be passed according to the implementation of the signaling server, the service provider may process the case as Case 1 or Case 2 depending on whether the signaling server mediating the terminals participating in avatar communication allows the user-defined attributes.

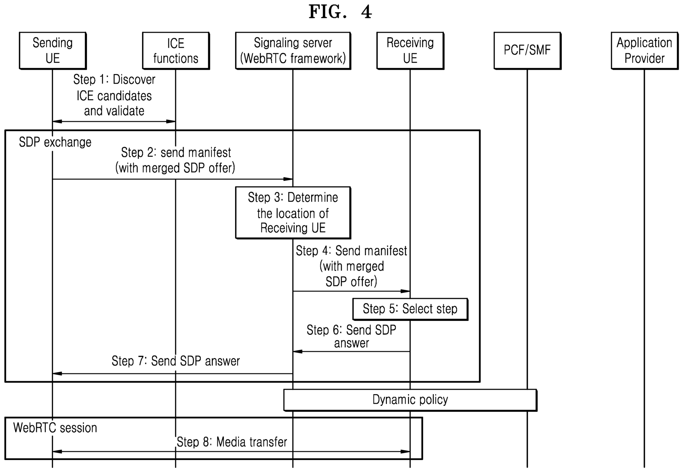

FIG. 4 illustrates a signal flow for media transfer according to an embodiment of the present disclosure.

Step 1: The sending terminal may discover an ICE candidate and validate. The sending terminal may request and receive an optimal path to the receiving terminal from an ICE function.

Step 2: The sending terminal may send a transmission manifest including a merged SDP offer to the signaling server.

Step 3: The signaling server may determine the location of the receiving terminal.

Step 4: The signaling server may send the merged SDP offer to the receiving terminal.

Step 5: The receiving terminal may determine a suitable step based on the above EISD and TISD, identify data corresponding to the step by using a step_id, and generate an SDP answer including only the data.

Step 6: The receiving terminal may send the generated SDP answer to the signaling server.

Step 7: The signaling server may send the SDP answer to the sending terminal.

Step 8: Media transfer may be initiated.

### <Case 2>

In Case 2, the sending terminal may send, to the service provider, a manifest-type 1 that is a manifest including only model and step information, and the service provider may send the manifest to the receiving terminal. Because communication between the sending terminal and the receiving terminal is relayed in the service provider service, the relay of the manifest may also be included within the scope.

When receiving a manifest-type 2, the receiving terminal may select a step based on the data size of each step in the manifest and send the sess-id or step-id of a desired step to the service provider.

When receiving a manifest-type 3, the receiving terminal may select a step based on the data size of each step in the manifest and send the step-id of a desired step to the service provider.

The service provider may send the address of the receiving terminal and the sess-id or step-id to the sending terminal, the sending terminal may send an SDP corresponding to a specified identifier to the signaling server as an SDP offer, and the signaling serve may send the SDP offer to the receiving terminal.

The receiving terminal may generate an SDP answer and send the SDP answer to the signaling server, and the signaling server may send the SDP answer to the sending terminal.

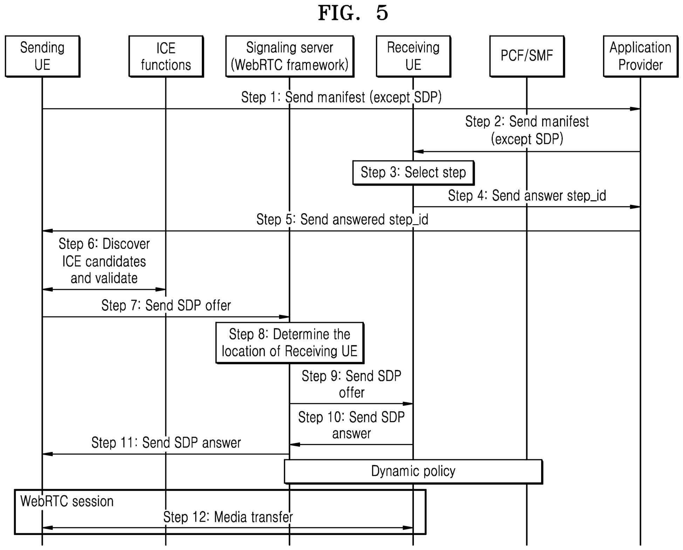

FIG. 5 illustrates a signal flow for media transfer according to an embodiment of the present disclosure.

Step 1: The sending terminal may send a transmission manifest to the service provider. The transmission manifest may include information about the model and the step attribute but may not include the SDP.

Step 2: The service provider may send the transmission manifest to the receiving terminal.

Step 3: The receiving terminal may determine a suitable step based on the above EISD and TISD and identify data corresponding to the step by using the step_id.

Step 4: The receiving terminal may send a step identifier of a desired step to the service provider.

Step 5: The service provider may send, to the sending terminal, information about the step identifier desired by the receiving terminal.

Step 6: The sending terminal may discover and validate an ICE candidate. The sending terminal may request and receive an optimal path to the receiving terminal from an ICE function.

Step 7: The sending terminal may extract an SDP corresponding to the desired step and send the same as an SDP offer to the receiving terminal. The SDP offer may be first sent to the signaling server.

Step 8: The signaling server may determine the location of the receiving terminal.

Step 9: The signaling server may send the SDP offer to the receiving terminal.

Step 10: The receiving terminal may generate an SDP answer and send the SDP answer to the signaling server.

Step 11: The signaling server may send the SDP answer to the sending terminal.

Step 12: Media transfer may be initiated.

A core network entity may be controlled to perform operations according to various embodiments described above.

The core network entity may include a transceiver, a memory, and a processor. The transceiver may provide an interface for communicating with other devices in the network. Particularly, the transceiver may convert bit streams transmitted from the core network entity to other devices into physical signals and convert physical signals received from other devices into bit streams. In other words, the transceiver may transmit and receive signals. Accordingly, the transceiver may be referred to as a modem, a transmitter, a receiver, a communication unit, or a communication module. In this case, the transceiver may allow the core network entity to communicate with another device or system through a backhaul connection (e.g., wired backhaul or wireless backhaul), through another connection method, or through the network.

The memory may store data such as a basic program, an application program, or configuration information for operation of the core network entity. The memory may include a volatile memory, a nonvolatile memory, or a combination of a volatile memory and a nonvolatile memory. Also, the memory may provide stored data according to a request from the processor.

The processor may control the overall operations of the core network object. For example, the processor may transmit and receive signals through the transceiver. Also, the processor may write/read data into/from the memory. For this purpose, the processor may include at least one processor. The processor may control the core network entity to perform operations according to various embodiments described above.

A machine-readable storage medium may be provided in the form of a non-transitory storage medium. Here, the term "non-transitory storage medium" may mean that the storage medium is a tangible device and does not include signals (e.g., electromagnetic waves), and may mean that data may be semipermanently or temporarily stored in the storage medium. For example, the "non-transitory storage medium" may include a buffer in which data is temporarily stored.

According to an embodiment of the present disclosure, the method according to various embodiments of the present disclosure described herein may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user devices (e.g., smartphones). In the case of online distribution, at least a portion of the computer program product (e.g., a downloadable app) may be at least temporarily stored or temporarily generated in a machine-readable storage medium such as a memory of a manufacturer server, a memory of an application store server, or a memory of a relay server.

According to an embodiment of the present disclosure, an operation method of a sending terminal may include obtaining at least one avatar model manifest including information about at least one step for representing an avatar model.

According to an embodiment of the present disclosure, the operation method of the sending terminal may include transmitting the at least one avatar model manifest to a receiving terminal.

According to an embodiment of the present disclosure, the operation method of the sending terminal may include receiving transmission request information from the receiving terminal.

According to an embodiment of the present disclosure, the operation method of the sending terminal may include transmitting the at least one step for representing the avatar model, to the receiving terminal based on the transmission request information.

According to an embodiment of the present disclosure, the operation method of the sending terminal may include transmitting a session description protocol (SDP) offer to the receiving terminal based on the transmission request information.

According to an embodiment of the present disclosure, the operation method of the sending terminal may include receiving an SDP answer from the receiving terminal.

According to an embodiment of the present disclosure, the operation method of the sending terminal may include transmitting the at least one step for representing the avatar model, to the receiving terminal based on the SDP answer.

According to an embodiment of the present disclosure, the at least one avatar model manifest may include an SDP offer.

According to an embodiment of the present disclosure, the transmission request information may include an SDP answer.

According to an embodiment of the present disclosure, the operating method of the sending terminal may include transmitting the at least one step for representing the avatar model, to the receiving terminal based on the SDP answer.

According to an embodiment of the present disclosure, the at least one avatar model manifest may be sent from the sending terminal to the receiving terminal through a server.

According to an embodiment of the present disclosure, the information about the at least one step may include at least one of number information of the at least one step or size information of the at least one step.

According to an embodiment of the present disclosure, the at least one step may include semantic information for representing the avatar model.

According to an embodiment of the present disclosure, an operation method of a receiving terminal may include receiving, from a sending terminal, an avatar model manifest including information about at least one step for representing an avatar model.

According to an embodiment of the present disclosure, the operation method of the receiving terminal may include transmitting transmission request information to the sending terminal based on the at least one avatar model manifest.

According to an embodiment of the present disclosure, the operation method of the receiving terminal may include receiving, from the sending terminal, at least one step for representing the avatar model.

According to an embodiment of the present disclosure, the operation method of the receiving terminal may include receiving a session description protocol (SDP) offer from the sending terminal.

According to an embodiment of the present disclosure, the operation method of the receiving terminal may include transmitting an SDP answer to the sending terminal based on the SDP offer.

According to an embodiment of the present disclosure, the operation method of the receiving terminal may include receiving the at least one step for representing the avatar model, from the sending terminal based on the SDP answer.

According to an embodiment of the present disclosure, the at least one avatar model manifest may include an SDP offer.

According to an embodiment of the present disclosure, the transmission request information may include an SDP answer.

According to an embodiment of the present disclosure, the operation method of the receiving terminal may include receiving the at least one step for representing the avatar model, from the sending terminal based on the SDP answer.

According to an embodiment of the present disclosure, the at least one avatar model manifest may be sent from the sending terminal to the receiving terminal through a server.

According to an embodiment of the present disclosure, the information about the at least one step may include at least one of number information of the at least one step or size information of the at least one step.

According to an embodiment of the present disclosure, the at least one step may include semantic information for representing the avatar model.

According to an embodiment of the present disclosure, a sending terminal may include a transceiver and at least one processor.

According to an embodiment of the present disclosure, the at least one processor may be configured to obtain at least one avatar model manifest including information about at least one step for representing an avatar model.

According to an embodiment of the present disclosure, the at least one processor may be configured to transmit the at least one avatar model manifest to a receiving terminal.

According to an embodiment of the present disclosure, the at least one processor may be configured to receive transmission request information from the receiving terminal.

According to an embodiment of the present disclosure, the at least one processor may be configured to transmit, to the receiving terminal, the at least one step for representing the avatar model, based on the transmission request information.

According to an embodiment of the present disclosure, at least one processor may be configured to transmit a session description protocol (SDP) offer to the receiving terminal based on the transmission request information.

According to an embodiment of the present disclosure, the at least one processor may be configured to receive an SDP answer from the receiving terminal.

According to an embodiment of the present disclosure, the at least one processor may be configured to transmit, to the receiving terminal, the at least one step for representing the avatar model, based on the SDP answer.

According to an embodiment of the present disclosure, the at least one processor may be configured to transmit the at least one step for representing the avatar model, to the receiving terminal based on the SDP answer.

According to an embodiment of the present disclosure, the at least one avatar model manifest may be sent from the sending terminal to the receiving terminal through a server.

According to an embodiment of the present disclosure, the information about the at least one step may include at least one of number information of the at least one step or size information of the at least one step.

According to an embodiment of the present disclosure, the at least one step may include semantic information for representing the avatar model.

According to an embodiment of the present disclosure, a receiving terminal may include a transceiver and at least one processor.

According to an embodiment of the present disclosure, the at least one processor may be configured to receive, from the sending terminal, an avatar model manifest including information about at least one step for representing an avatar model.

According to an embodiment of the present disclosure, the at least one processor may be configured to transmit transmission request information to the sending terminal based on the at least one avatar model manifest.

According to an embodiment of the present disclosure, the at least one processor may be configured to receive, from the sending terminal, the at least one step for representing the avatar model.

According to an embodiment of the present disclosure, the at least one processor may be configured to receive a session description protocol (SDP) offer from the sending terminal.

According to an embodiment of the present disclosure, the at least one processor may be configured to transmit an SDP answer to the sending terminal based on the SDP offer.

According to an embodiment of the present disclosure, the at least one processor may be configured to receive, from the sending terminal, the at least one step for representing the avatar model, based on the SDP answer.

According to an embodiment of the present disclosure, the at least one processor may be configured to receive, from the sending terminal, the at least one step for representing the avatar model, based on the SDP answer.

According to an embodiment of the present disclosure, the at least one avatar model manifest may include an SDP offer.

According to an embodiment of the present disclosure, the transmission request information may include an SDP answer.

According to an embodiment of the present disclosure, the at least one avatar model manifest may be sent from the sending terminal to the receiving terminal through a server.

## Claims

1. An operation method of a sending terminal, the operation method comprising:
obtaining at least one avatar model manifest including information about at least one step for representing an avatar model;
transmitting the at least one avatar model manifest to a receiving terminal;
receiving transmission request information from the receiving terminal; and
transmitting, to the receiving terminal, the at least one step for representing the avatar model, based on the transmission request information.

2. The operation method of claim 1, wherein the transmitting of the at least one step for representing the avatar model comprises:
transmitting a session description protocol (SDP) offer to the receiving terminal based on the transmission request information;
receiving an SDP answer from the receiving terminal; and
transmitting, to the receiving terminal, the at least one step for representing the avatar model, based on the SDP answer.

3. The operation method of claim 1, wherein:
the at least one avatar model manifest includes an SDP offer,
the transmission request information includes an SDP answer,
the transmitting of the at least one step for representing the avatar model comprises transmitting, to the receiving terminal, the at least one step for representing the avatar model, based on the SDP answer, and
the at least one avatar model manifest is sent from the sending terminal to the receiving terminal through a server.

4. The operation method of claim 1, wherein:
the information about the at least one step includes at least one of number information of the at least one step or size information of the at least one step, and
the at least one step includes semantic information for representing the avatar model.

5. An operation method of a receiving terminal, the operation method comprising:
receiving, from a sending terminal, an avatar model manifest including information about at least one step for representing an avatar model;
transmitting transmission request information to the sending terminal based on the at least one avatar model manifest; and
receiving, from the sending terminal, the at least one step for representing the avatar model.

6. The operation method of claim 5, wherein the receiving of the at least one step for representing the avatar model comprises:
receiving a session description protocol (SDP) offer from the sending terminal;
transmitting an SDP answer to the sending terminal based on the SDP offer; and
receiving, from the sending terminal, the at least one step for representing the avatar model, based on the SDP answer.

7. The operation method of claim 5, wherein:
the at least one avatar model manifest includes an SDP offer,
the transmission request information includes an SDP answer,
the receiving of the at least one step for representing the avatar model comprises receiving, from the sending terminal, the at least one step for representing the avatar model, based on the SDP answer, and
the at least one avatar model manifest is sent from the sending terminal to the receiving terminal through a server.

8. The operation method of claim 5, wherein:
the information about the at least one step includes at least one of number information of the at least one step or size information of the at least one step, and
the at least one step includes semantic information for representing the avatar model.

9. A sending terminal comprising:
a transceiver; and
at least one processor configured to:
obtain at least one avatar model manifest including information about at least one step for representing an avatar model,
transmit the at least one avatar model manifest to a receiving terminal,
receive transmission request information from the receiving terminal, and
transmit, to the receiving terminal, the at least one step for representing the avatar model, based on the transmission request information.

10. The sending terminal of claim 9, wherein the at least one processor is configured to:
transmit a session description protocol (SDP) offer to the receiving terminal based on the transmission request information,
receive an SDP answer from the receiving terminal, and
transmit, to the receiving terminal, the at least one step for representing the
avatar model, based on the SDP answer.

11. The sending terminal of claim 9, wherein:
the at least one avatar model manifest includes an SDP offer,
the transmission request information includes an SDP answer,
the at least one processor is configured to transmit, to the receiving terminal,
the at least one step for representing the avatar model, based on the SDP answer,
the at least one avatar model manifest is sent from the sending terminal to the receiving terminal through a server.

12. The sending terminal of claim 9, wherein:
the information about the at least one step includes at least one of number information of the at least one step or size information of the at least one step, and
the at least one step includes semantic information for representing the avatar model.

13. A receiving terminal comprising:
a transceiver; and
at least one processor configured to:
receive, from a sending terminal, an avatar model manifest including information about at least one step for representing an avatar model,
transmit transmission request information to the sending terminal based on the at least one avatar model manifest, and
receive, from the sending terminal, the at least one step for representing the avatar model.

14. The receiving terminal of claim 13, wherein the at least one processor is configured to:
receive a session description protocol (SDP) offer from the sending terminal,
transmit an SDP answer to the sending terminal based on the SDP offer, and
receive, from the sending terminal, the at least one step for representing the avatar model, based on the SDP answer.

15. The receiving terminal of claim 13, wherein:
the at least one avatar model manifest includes an SDP offer,
the transmission request information includes an SDP answer,
the at least one processor is configured to receive, from the sending terminal,
the at least one step for representing the avatar model, based on the SDP answer, and
the at least one avatar model manifest is sent from the sending terminal to the receiving terminal through a server.
